# EUROPEAN PATENT SPECIFICATION

(11) **EP 3 107 964 B1**
(45) Date of publication and mention of the grant of the patent: **03.10.2018**
(21) Application number: 15710003.3
(22) Date of filing: 12.02.2015
(51) Int. Cl.: C08L 69/00

(54) **THERMOPLASTIC COMPOSITION AND ARTICLE**
THERMOPLASTISCHE ZUSAMMENSETZUNG UND ARTIKEL
COMPOSITION THERMOPLASTIQUE ET ARTICLE

(30) Priority: 20.02.2014 US 201414185063
(43) Date of publication of application: 28.12.2016
(73) Proprietor: SABIC Global Technologies B.V., 4612 PX Bergen op Zoom (NL)
(72) Inventor: WANG, Huanbing, Shanghai 201319 (CN); WAN, Shun, Shanghai 201319 (CN); LI, Ying, Shanghai 201319 (CN); SUN, Pei, Shanghai 201319 (CN); SHI, Hongtao, Shanghai 201319 (CN); SHEN, Dake, Shanghai 201319 (CN)
(74) Representative: Modiano, Micaela Nadia
(86) International application number: PCT/IB2015/051064
(87) International publication number: WO 2015/125050

(56) References cited:
- WO-A1-00/26274
- US-A1- 2010 168 314

## Description

### BACKGROUND OF THE INVENTION

Black-colored plastics are commonly used for consumer electronics parts, including flat screen television bezels and mobile phone backs. Deep black polycarbonate compositions can be prepared, but they exhibit inadequate impact strength for some applications. The impact strength of polycarbonate can be increased by the addition of a rubber-containing impact modifier. However, the addition of impact modifier typically increases the haze and decreases the gloss of molded parts, making them unsuitable for product applications requiring a glossy black appearance. There remains a need for impact modified polycarbonate compositions exhibiting increased gloss and reduced haze without compromising impact strength.

WO 00/26274 relates to block copolyestercarbonates having improved weatherability and compositions that are used to improve the gloss of the resulting product. US2010/168314 discloses specific thermoplastic compositions with improved low temperature ductility containing a polyester or a blend of polyester and polycarbonate, an impact modifier and a block copolyestercarbonate.

### BRIEF SUMMARY OF EMBODIMENTS OF THE INVENTION

One embodiment is a composition comprising, based on the total weight of the composition: 40 to 93.9 weight percent of an aromatic polycarbonate; 3 to 35 weight percent of a copolyester comprising cyclohexanedimethylene isophthalate/terephthalate repeat units having the structure 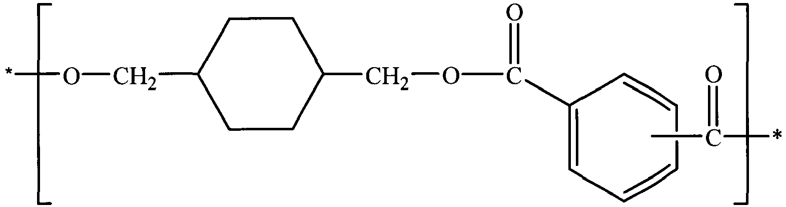 and 2,2,4,4-tetramethylcyclobutylene isophthalate/terephthalate repeat units having the structure 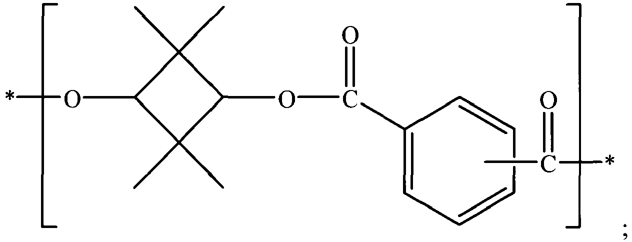 a block polyestercarbonate comprising a polyester block comprising resorcinol ester repeat units having the structure 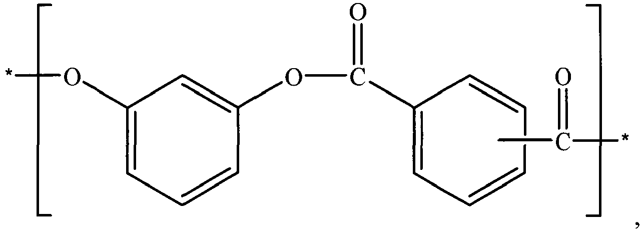 and
a polycarbonate block comprising carbonate repeat units having the structure 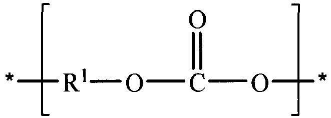 wherein at least 60 percent of the total number of R¹ groups are aromatic; or a combination of the copolyester and the block polyestercarbonate; 3 to 35 weight percent of an impact modifier; and 0.1 to 3 weight percent of a black colorant.

Another embodiment is an article comprising the composition.

These and other embodiments are described in detail below.

### DETAILED DESCRIPTION OF THE INVENTION

The present inventors have determined that increased gloss and reduced haze are exhibited by an impact-modified polycarbonate composition comprising specific amounts of an aromatic polycarbonate, a specific copolyester or a specific block polyestercarbonate or a combination thereof, an impact modifier, and a black colorant. The increased gloss and reduced haze are attained without compromising impact strength

Thus, one embodiment is a composition comprising, based on the total weight of the composition: 40 to 93.9 weight percent of an aromatic polycarbonate; 3 to 35 weight percent of a copolyester comprising cyclohexanedimethylene isophthalate/terephthalate repeat units having the structure 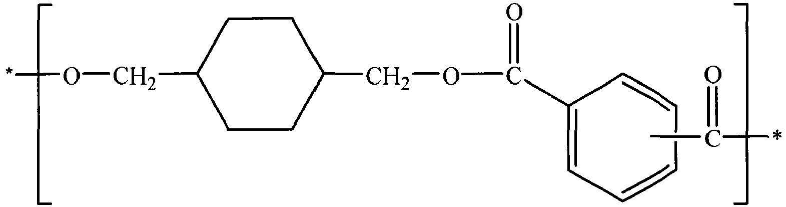 and 2,2,4,4-tetramethylcyclobutylene isophthalate/terephthalate repeat units having the structure 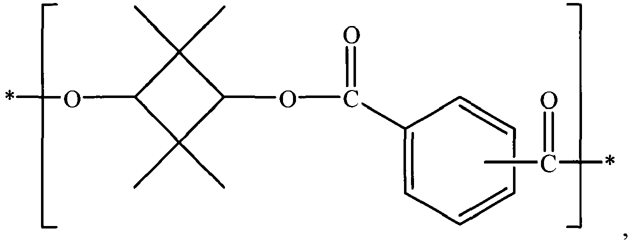 3 to 35 weight percent of an impact modifier; and 0.1 to 3 weight percent of a black colorant.

The composition includes an aromatic polycarbonate. "Polycarbonate" as used herein means a polymer or copolymer having repeating structural carbonate units of the formula 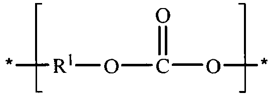 wherein at least 60 percent of the total number of R¹ groups are aromatic. Specifically, each R¹ can be derived from a dihydroxy compound such as an aromatic dihydroxy compound of the formula 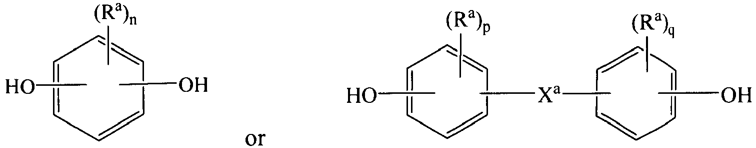 wherein n, p, and q are each independently 0, 1, 2, 3, or 4; R^{a} is independently at each occurrence halogen, or unsubstituted or substituted C₁₋₁₀ hydrocarbyl; and X^{a} is a single bond, -O-, -S-, -S(O)-, -S(O)₂-, -C(O)-, or a C₁₋₁₈ hydrocarbylene, which can be cyclic or acyclic, aromatic or non-aromatic, and can further comprise one or more heteroatoms selected from halogens, oxygen, nitrogen, sulfur, silicon, or phosphorous. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. As used herein, "substituted" means including at least one substituent such as a halogen (i.e., F, Cl, Br, I), hydroxyl, amino, thiol, carboxyl, carboxylate, amide, nitrile, sulfide, disulfide, nitro, C₁₋₁₈ alkyl, C₁₋₁₈ alkoxyl, C₆₋₁₈ aryl, C₆₋₁₈ aryloxyl, C₇₋₁₈ alkylaryl, or C₇₋₁₈ alkylaryloxyl. So, when the hydrocarbyl residue is described as substituted, it can contain heteroatoms in addition to carbon and hydrogen.

Some illustrative examples of specific dihydroxy compounds include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1 -dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, and 2,3,5,6-tetrabromo hydroquinone.

Specific dihydroxy compounds include resorcinol, 2,2-bis(4-hydroxyphenyl) propane ("bisphenol A" or "BPA"), 3,3-bis(4-hydroxyphenyl)phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), 1,1-bis(4-hydroxy-3-methylphenyl)-3,3,5-trimethylcyclohexane (isophorone bisphenol), and combinations thereof.

In some embodiments, at least 90 percent of the total number of R¹ groups in the polycarbonate have the formula 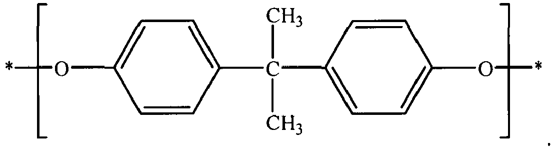 In some embodiments, the polycarbonate comprises or consists of bisphenol A polycarbonate resin.

More than one polycarbonate can be used. For example, the composition can comprise a first polycarbonate having a weight average molecular weight of 18,000 to 25,000 atomic mass units and a second polycarbonate having a weight average molecular weight of 27,000 to 35,000 atomic mass units.

Methods of forming polycarbonates are known, and many are commercially available from suppliers including SABIC Innovative Plastics, Bayer MaterialScience, and Mitsubishi Chemical Corp.

The composition comprises the polycarbonate in an amount of 40 to 93.9 weight percent, based on the total weight of the composition. Within this range, the polycarbonate amount can be 50 to 80 weight percent, specifically 55 to 70 weight percent.

In addition to the aromatic polycarbonate, the composition comprises a specific copolyester, a specific block polyestercarbonate, or a combination of the specific copolymer and the specific block polyestercarbonate. The specific copolyester is a copolyester comprising cyclohexanedimethylene isophthalate/terephthalate repeat units having the structure 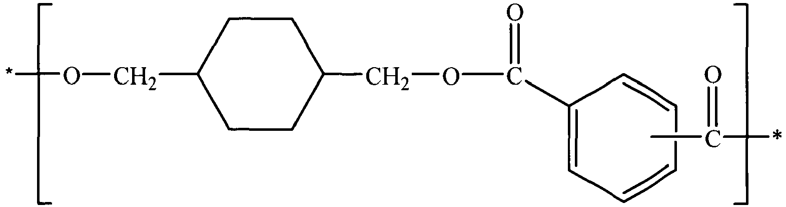 and 2,2,4,4-tetramethylcyclobutylene isophthalate/terephthalate repeat units having the structure 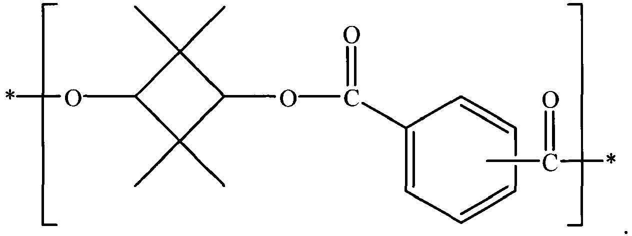 In this context, "isophthalate/terephthalate" means iosphthalate, or terephthalate, or a combination of isophthalate and terephthalate.

In some embodiments, the copolyester comprises cyclohexanedimethylene terephthalate repeat units having the structure 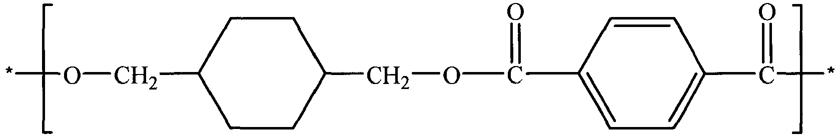 and
2,2,4,4-tetramethylcyclobutylene terephthalate repeat units having the structure

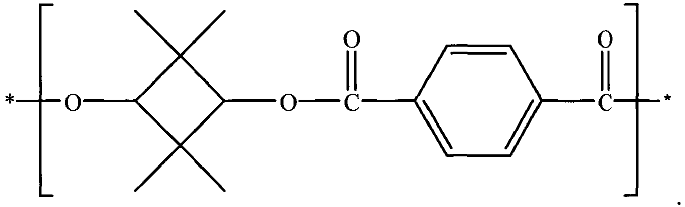

In some embodiments, the copolyester comprises, based on the weight of the copolyester, 10 to 90 weight percent of the cyclohexanedimethylene isophthalate/terephthalate repeat units and 10 to 90 weight percent of the 2,2,4,4-tetramethylcyclobutylene isophthalate/terephthalate repeat units.

The specific block polyester carbonate is a block polyestercarbonate comprising a polyester block comprising resorcinol ester repeat units having the structure 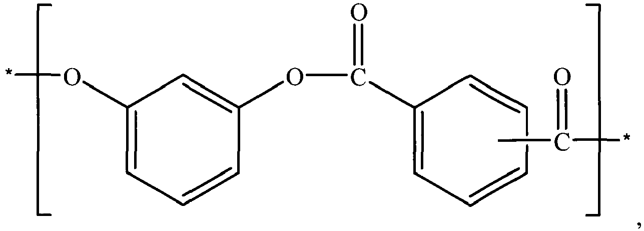 and
a polycarbonate block comprising carbonate repeat units having the structure 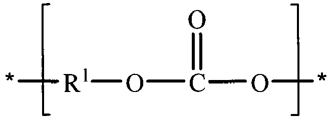 wherein at least 60 percent of the total number of R¹ groups are aromatic.

In some embodiments, the polyester block comprises resorcinol ester repeat units having the structures 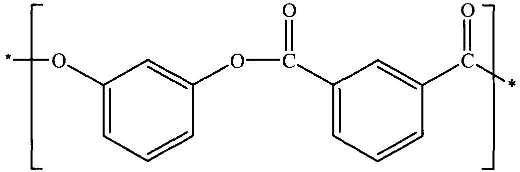 and 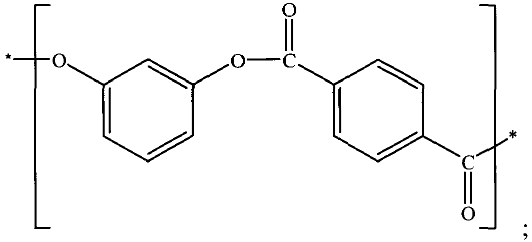 and
the polycarbonate block comprises carbonate repeat units having the structure

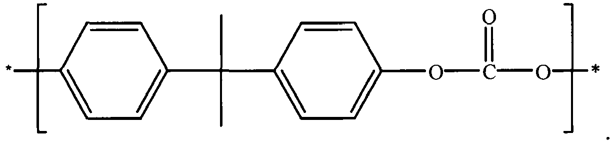

The composition can comprise the copolyester, the block polyestercarbonate, or a combination of the copolyester and the block polyestercarbonate. When a combination of the copolyester and the block polyestercarbonate is used, the weight ratio of the copolyester to the block polyestercarbonate can be 1:99 to 99:1, specifically 10:90 to 90:10. The amount of the copolyester, the block polyestercarbonate, or a combination of the copolyester and the block polyestercarbonate is 3 to 35 weight percent, based on the total weight of the composition. Within this range, the component amount can be 5 to 25 weight percent, specifically 7 to 20 weight percent.

The composition further comprises an impact modifier. Suitable impact modifiers include, for example, natural rubber, a fluoroelastomer, an ethylene-propylene rubber (EPR), an ethylene-butene rubber, an ethylene-propylene-diene monomer rubber (EPDM), an acrylate rubber, a hydrogenated nitrile rubber (HNBR), a silicone elastomer, a styrene-butadiene-styrene block copolymer (SBS), a styrene-butadiene rubber (SBR), a styrene-(ethylene-butene)-styrene block copolymer (SEBS), a styrene-isoprene-styrene block copolymer (SIS), a styrene-(ethylene-propylene)-styrene block copolymer (SEPS), an acrylonitrile-butadiene-styrene copolymer (ABS, including bulk ABS and high-rubber graft ABS), an acrylonitrile-ethylene-propylene-diene-styrene copolymer (AES), a methyl methacrylate-butadiene-styrene block copolymers (MBS), or a combination thereof. In some embodiments, the impact modifier comprises an acrylonitrile-butadiene-styrene copolymer (ABS).

The composition comprises the impact modifier in an amount of 3 to 35 weight percent, based on the total weight of the composition. In some embodiments, particularly those in which the copolyester is used, the impact modifier amount can be 10 to 35 weight percent, specifically 20 to 30 weight percent. In some embodiments, particularly those in which the block polyestercarbonate is used, the impact modifier amount can be 3 to 20 weight percent, specifically 3 to 13 weight percent.

The composition further comprises a black colorant. Suitable black colorants include dyes, pigments, and mixtures thereof. In some embodiments, the black colorant comprises carbon black. Suitable carbon blacks are commercially available and include, for example, MONARCH™ 800, MONARCH™ 900, MONARCH™ 1000, and MONARCH™ 1400 from Cabot; SATIN BLACK™ SBX452, SATIN BLACK™ SBX552, and SATIN BLACK™ SBX652 from Continental Carbon; RAVEN™ 2500 from Columbian Chemicals; and PRINTEX™ 85 from Degussa. In some embodiments, the black colorant comprises at least two organic dyes. Suitable dye classes from which the at least two organic dyes can be selected include anthraquinones, anthrapyridones, perylenes, anthracenes, perinones, indanthrones, quinacridones, xanthenes, thioxanthenes, oxazines, oxazolines, indigoids, thioindigoids, quinophthalones, naphthalimides, cyanines, methines, pyrazolones, lactones, coumarins, bis-benzoxazolylthiophenes, naphthalenetetracarboxylic acids, phthalocyanines, triarylmethanes, aminoketones, bis(styryl)biphenyls, azines, rhodamines, derivatives of the foregoing, and combinations thereof. Specific organic dyes suitable for use among the at least two organic dyes include Disperse Yellow 201, Solvent Green 3, Solvent Red 52, Solvent Red 135, Solvent Violet 13, Disperse Orange 47, Solvent Orange 60, and Solvent Blue 104. When the colorant includes organic dyes and particularly when the colorant consists of organic dyes, at least two dyes of different colors can be employed to produce a black color. For example, black color can be provided by a combination of a red and green dye, or a combination of a blue dye and an orange dye, or a combination of a purple dye and a yellow dye. In some embodiments, the black colorant comprises carbon black, at least two dyes, or a combination thereof.

The composition comprises the black colorant in an amount of 0.1 to 3 weight percent, based on the total weight of the composition. Within this range, the black colorant amount can be 0.2 to 2 weight percent, specifically 0.2 to 1.5 weight percent.

The composition can, optionally, further comprise a styrene-acrylonitrile copolymer (SAN). When present, the styrene-acrylonitrile copolymer can be used in an amount of 5 to 20 weight percent, based on the total weight of the composition. Within this range, the styrene-acrylonitrile copolymer amount can be 9 to 15 weight percent.

The composition can, optionally, further comprise a flame retardant. A flame retardant is a chemical compound or mixture of chemical compounds capable of improving the flame retardancy of the thermoplastic composition. Suitable flame retardants include organophosphate esters, metal dialkylphosphinates, melamine-containing flame retardants, metal hydroxides, and combinations thereof.

In some embodiments, the flame retardant comprises an organophosphate ester. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof. In some embodiments, the flame retardant comprises bisphenol A bis(diphenyl phosphate).

In some embodiments, the flame retardant comprises a metal dialkylphosphinate. As used herein, the term "metal dialkylphosphinate" refers to a salt comprising at least one metal cation and at least one dialkylphosphinate anion. In some embodiments, the metal dialkylphosphinate has the formula 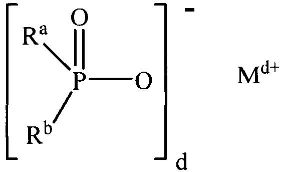 wherein R^{a} and R^{b} are each independently C₁-C₆ alkyl; M is calcium, magnesium, aluminum, or zinc; and d is 2 or 3. Examples of R^{a} and R^{b} include methyl, ethyl, n-propyl, isopropyl, n-butyl, tert-butyl, and n-pentyl. In some embodiments, R^{a} and R^{b} are ethyl, M is aluminum, and d is 3 (that is, the metal dialkylphosphinate is aluminum tris(diethylphosphinate)).

In some embodiments, the flame retardant comprises a melamine-containing flame retardant. Melamine-containing flame retardants include those comprising a melamine-containing heterocyclic base and a phosphate or pyrophosphate or polyphosphate acid. In some embodiments, the melamine-containing flame retardant has the formula 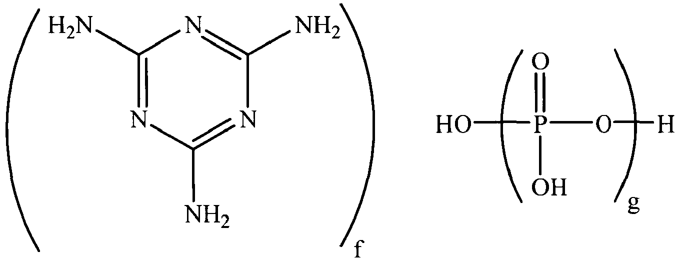 wherein g is 1 to 10,000, and the ratio of f to g is 0.5:1 to 1.7:1, specifically 0.7:1 to 1.3:1, more specifically 0.9:1 to 1.1:1. It will be understood that this formula includes species in which one or more protons are transferred from the phosphate group(s) to the melamine group(s). When g is 1, the melamine-containing flame retardant is melamine phosphate (CAS Reg. No. 20208-95-1). When g is 2, the melamine-containing flame retardant is melamine pyrophosphate (CAS Reg. No. 15541 60-3). When g is, on average, greater than 2, the melamine-containing flame retardant is a melamine polyphosphate (CAS Reg. No. 56386-64-2). In some embodiments, the melamine-containing flame retardant is melamine pyrophosphate, melamine polyphosphate, or a mixture thereof. In some embodiments in which the melamine-containing flame retardant is melamine polyphosphate, g has an average value of greater than 2 to 10,000, specifically 5 to 1,000, more specifically 10 to 500. In some embodiments in which the melamine-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates may be prepared by reacting polyphosphoric acid and melamine, as described, for example, in U.S. Pat. No. 6,025,419 to Kasowski et al., or by heating melamine pyrophosphate under nitrogen at 290°C to constant weight, as described in U.S. Patent No. 6,015,510 to Jacobson et al. In some embodiments, the melamine-containing flame retardant comprises melamine cyanurate.

In some embodiments, the flame retardant comprises a metal hydroxide. Suitable metal hydroxides include all those capable of providing fire retardancy, as well as combinations of such metal hydroxides. The metal hydroxide can be chosen to have substantially no decomposition during processing of the fire additive composition and/or flame retardant thermoplastic composition. Substantially no decomposition is defined herein as amounts of decomposition that do not prevent the flame retardant additive composition from providing the desired level of fire retardancy. Exemplary metal hydroxides include, but are not limited to, magnesium hydroxide (for example, CAS Reg. No. 1309-42-8), aluminum hydroxide (for example, CAS Reg. No. 21645-51-2), cobalt hydroxide (for example, CAS Reg. No. 21041-93-0), and combinations thereof. In some embodiments, the metal hydroxide comprises magnesium hydroxide. In some embodiments the metal hydroxide has an average particle size less than or equal to 10 micrometers and/or a purity greater than or equal to 90 weight percent. In some embodiments it is desirable for the metal hydroxide to contain substantially no water, for example as evidenced by a weight loss of less than 1 weight percent upon drying at 120°C for 1 hour. In some embodiments the metal hydroxide can be coated, for example, with stearic acid or other fatty acid.

When present, the flame retardant is used in an amount of 2 to 25 weight percent, based on the total weight of the composition. Within this range, the flame retardant amount can be 10 to 15 weight percent. In some embodiments, the composition comprises an organophosphate ester in an amount of 5 to 20 weight percent, specifically 10 to 15 weight percent.

The composition can, optionally, further comprise one or more additives, including flow modifiers, fillers (including fibrous and scale-like fillers), antioxidants, heat stabilizers, light stabilizers, ultraviolet (UV) light stabilizers, UV absorbing additives, plasticizers, lubricants, mold release agents, antistatic agents, anti-fog agents, antimicrobial agents, surface effect additives, radiation stabilizers, anti-drip agents (e.g., a styrene-acrylonitrile copolymer-encapsulated polytetrafluoroethylene (TSAN)), and combinations thereof. In general, the additives, when present, are used in a total amount of less than or equal to 5 weight percent, based on the total weight of the composition. Within this limit, the additives can be used in a total amount of less than or equal to 2 weight percent, specifically less than or equal to 1.5 weight percent.

In some embodiments, the composition comprises 0 to 1 weight percent of fillers, including reinforcing fillers such as glass fibers and talc, and non-reinforcing fillers such as silica and alumina. In some embodiments, the composition excludes fillers.

In some embodiments, the composition comprises 55 to 70 weight percent of the aromatic polycarbonate, 5 to 15 weight percent of the copolyester, 20 to 30 weight percent of the impact modifier, and 0.2 to 2 weight percent of the black colorant.

In some embodiments, the composition comprises 55 to 70 weight percent of the aromatic polycarbonate, 10 to 20 weight percent of the block polyestercarbonate, 3 to 13 weight percent of the impact modifier, and 0.2 to 2 weight percent of the black colorant.

In a very specific embodiment of the composition, the aromatic polycarbonate comprises repeat units having the structure 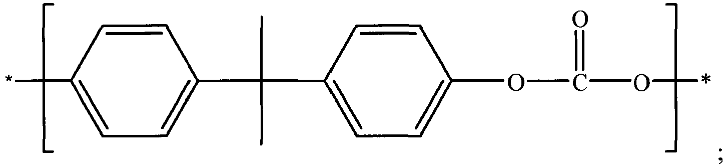 the copolyester comprises cyclohexanedimethylene terephthalate repeat units having the structure 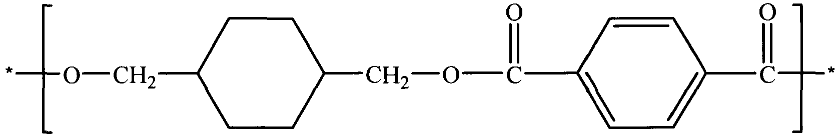 and
2,2,4,4-tetramethylcyclobutylene terephthalate repeat units having the structure 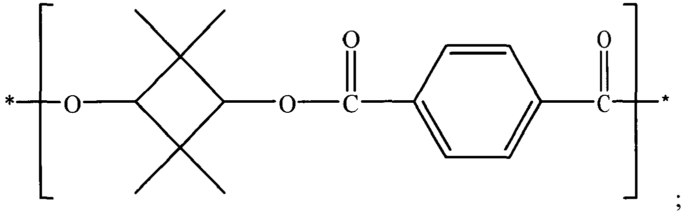 the impact modifier comprises a copolymer of acrylonitrile, butadiene, and styrene; and the composition comprises 55 to 70 weight percent of the aromatic polycarbonate, 5 to 15 weight percent of the copolyester, 20 to 30 weight percent of the impact modifier, and 0.2 to 2 weight percent of the black colorant.

In another very specific embodiment of the composition, the aromatic polycarbonate comprises repeat units having the structure 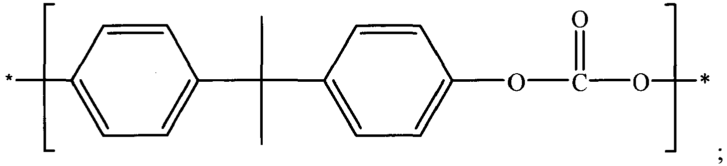 the polyester block of the block polyestercarbonate comprises resorcinol ester repeat units having the structures 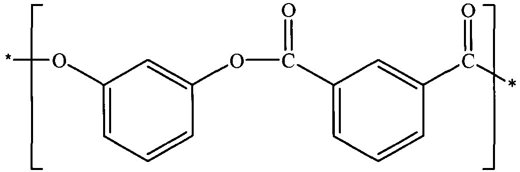 and 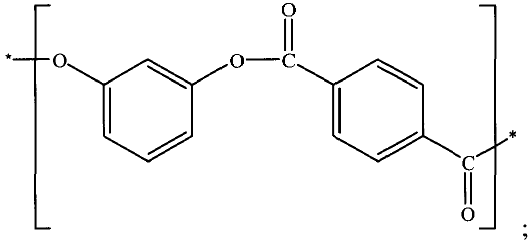 and
the polycarbonate block of the block polyestercarbonate comprises carbonate repeat units having the structure 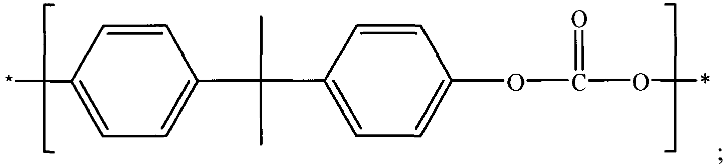 the impact modifier comprises a copolymer of acrylonitrile, butadiene, and styrene; and the composition comprises 55 to 70 weight percent of the aromatic polycarbonate, 10 to 20 weight percent of the block polyestercarbonate, 3 to 13 weight percent of the impact modifier, and 0.2 to 2 weight percent of the black colorant.

The composition is useful for fabricating articles, including television bezels, covers of computer gaming consoles, and mobile phone front bezels and back covers. The composition is also suitable for forming single-wall and multi-wall sheets. Suitable methods of forming such articles include single layer and multilayer sheet extrusion, injection molding, blow molding, film extrusion, profile extrusion, pultrusion, compression molding, thermoforming, pressure forming, hydroforming, vacuum forming, and the like. Combinations of the foregoing article fabrication methods can be used.

All of the variations of the composition described above can be applied to the article.

In a very specific embodiment of the article, the aromatic polycarbonate comprises repeat units having the structure 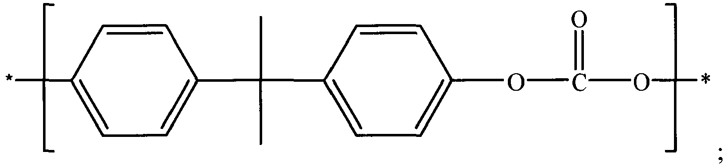 the copolyester comprises cyclohexanedimethylene terephthalate repeat units having the structure 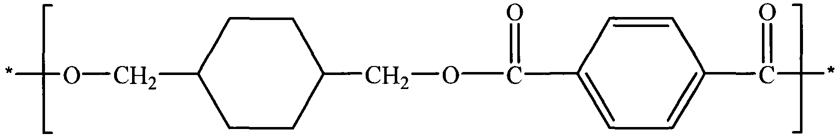 and
2,2,4,4-tetramethylcyclobutylene terephthalate repeat units having the structure 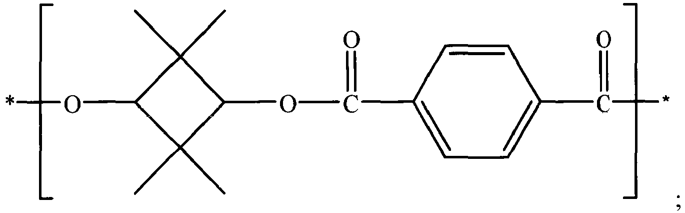 the impact modifier comprises a copolymer of acrylonitrile, butadiene, and styrene; and the composition comprises 55 to 70 weight percent of the aromatic polycarbonate, 5 to 15 weight percent of the copolyester, 20 to 30 weight percent of the impact modifier, and 0.2 to 2 weight percent of the black colorant.

In another very specific embodiment of the article, the aromatic polycarbonate comprises repeat units having the structure 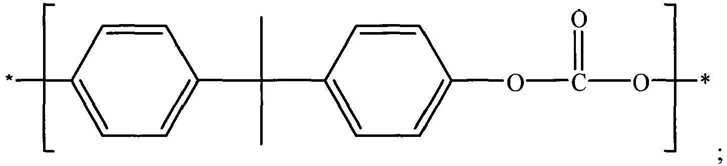 the polyester block of the block polyestercarbonate comprises resorcinol ester repeat units having the structures 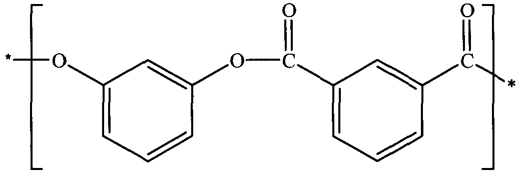 and 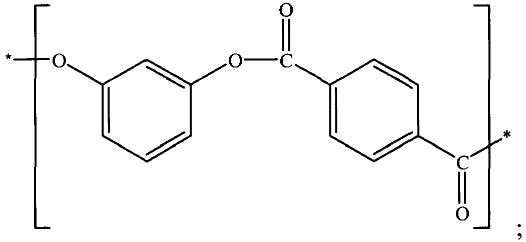 and
the polycarbonate block of the block polyestercarbonate comprises carbonate repeat units having the structure 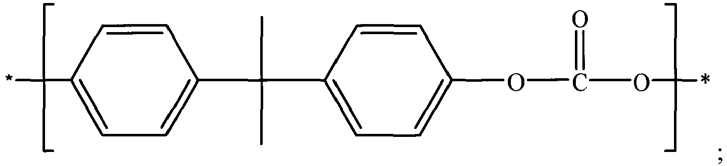 the impact modifier comprises a copolymer of acrylonitrile, butadiene, and styrene; and the composition comprises 55 to 70 weight percent of the aromatic polycarbonate, 10 to 20 weight percent of the block polyestercarbonate, 3 to 13 weight percent of the impact modifier, and 0.2 to 2 weight percent of the black colorant.

The invention includes at least the following embodiments.
Embodiment 1: A composition comprising, based on the total weight of the composition: 40 to 93.9 weight percent of an aromatic polycarbonate; 3 to 35 weight percent of a copolyester comprising cyclohexanedimethylene isophthalate/terephthalate repeat units having the structure 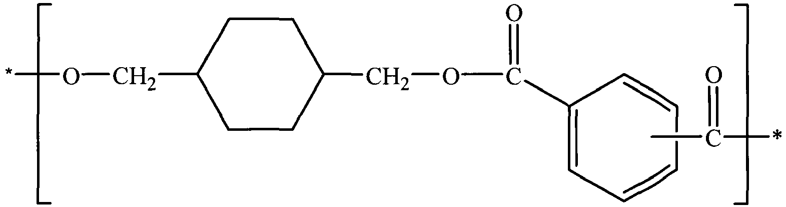 and 2,2,4,4-tetramethylcyclobutylene isophthalate/terephthalate repeat units having the structure 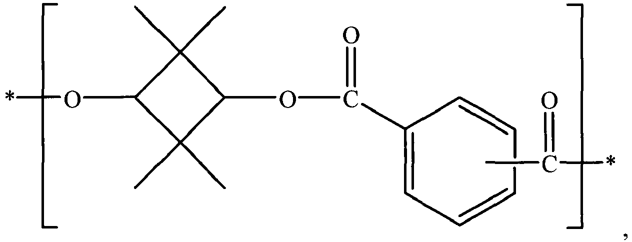 3 to 35 weight percent of an impact modifier; and 0.1 to 3 weight percent of a black colorant.
Embodiment 2: The composition of embodiment 1, wherein the aromatic polycarbonate comprises repeat units having the structure 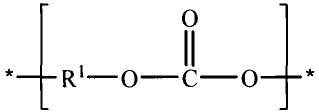 wherein at least 60 percent of the total number of R¹ groups are aromatic.
Embodiment 3: The composition of embodiment 1, wherein the aromatic polycarbonate comprises repeat units having the structure 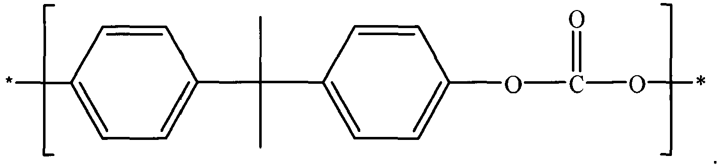
Embodiment4: The composition of embodiment 1, wherein the copolyester comprises cyclohexanedimethylene terephthalate repeat units having the structure 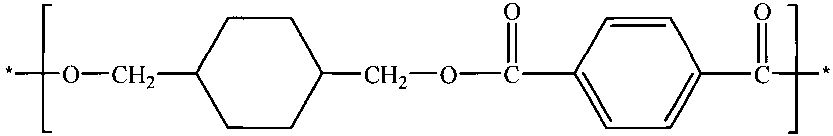 and 2,2,4,4-tetramethylcyclobutylene terephthalate repeat units having the structure 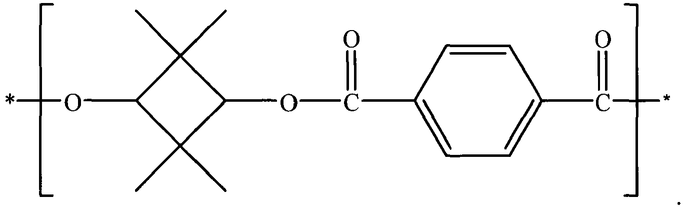
Embodiment5: The composition of embodiment 4, wherein the copolyester comprises, based on the weight of the copolyester, 10 to 90 weight percent of the cyclohexanedimethylene isophthalate/terephthalate repeat units and 10 to 90 weight percent of the 2,2,4,4-tetramethylcyclobutylene isophthalate/terephthalate repeat units.
Embodiment 6: The composition of any of embodiments 1-5, comprising 55 to 70 weight percent of the aromatic polycarbonate, 5 to 15 weight percent of the copolyester, 20 to 30 weight percent of the impact modifier, and 0.2 to 2 weight percent of the black colorant.
Embodiment7: The composition of any of embodiments 1-6, wherein the impact modifier comprises natural rubber, a fluoroelastomer, an ethylene-propylene rubber (EPR), an ethylene-butene rubber, an ethylene-propylene-diene monomer rubber (EPDM), an acrylate rubber, a hydrogenated nitrile rubber (HNBR), a silicone elastomer, a styrene-butadiene-styrene block copolymer (SBS), a styrene-butadiene rubber (SBR), a styrene-(ethylene-butene)-styrene block copolymer (SEBS), a styrene-isoprene-styrene block copolymer (SIS), a styrene-(ethylene-propylene)-styrene block copolymer (SEPS), an acrylonitrile-butadiene-styrene copolymer (ABS), an acrylonitrile-ethylene-propylene-diene-styrene copolymer (AES), a methyl methacrylate-butadiene-styrene block copolymers (MBS), or a combination thereof.
Embodiment8: The composition of any of embodiments 1-7, wherein the impact modifier comprises a copolymer of acrylonitrile, butadiene, and styrene.
Embodiment9: The composition of any of embodiments 1-8, further comprising 5 to 20 weight percent of a styrene-acrylonitrile copolymer.
Embodiment10: The composition of any of embodiments 1-9, further comprising 5 to 20 weight percent of an organophosphate ester.
Embodiment11: The composition of embodiment 1, wherein the aromatic polycarbonate comprises repeat units having the structure 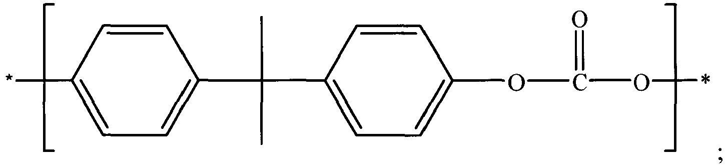 wherein the copolyester comprises cyclohexanedimethylene terephthalate repeat units having the structure 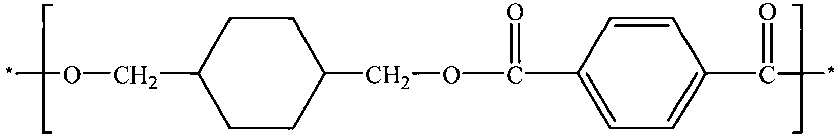 and 2,2,4,4-tetramethylcyclobutylene terephthalate repeat units having the structure 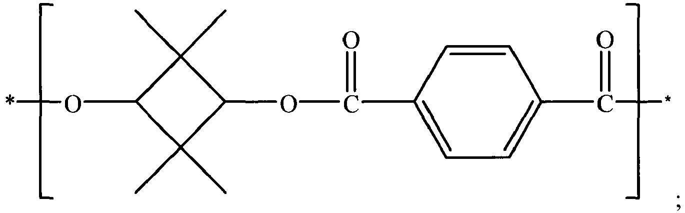 wherein the impact modifier comprises a copolymer of acrylonitrile, butadiene, and styrene; and wherein the composition comprises 55 to 70 weight percent of the aromatic polycarbonate, 5 to 15 weight percent of the copolyester, 20 to 30 weight percent of the impact modifier, and 0.2 to 2 weight percent of the black colorant.
Embodiment12: An article comprising the composition of any of embodiments 1-11.
Embodiment 13: The article of embodiment12, selected from television bezels, covers of computer gaming consoles, and mobile phone front bezels and back covers.
Embodiment14: The article of embodiment 12 or 13, wherein the aromatic polycarbonate comprises repeat units having the structure 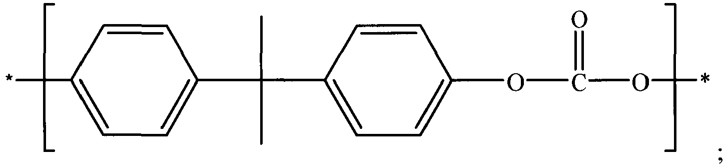 wherein the copolyester comprises cyclohexanedimethylene terephthalate repeat units having the structure 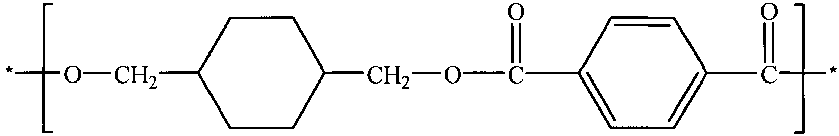 and 2,2,4,4-tetramethylcyclobutylene terephthalate repeat units having the structure 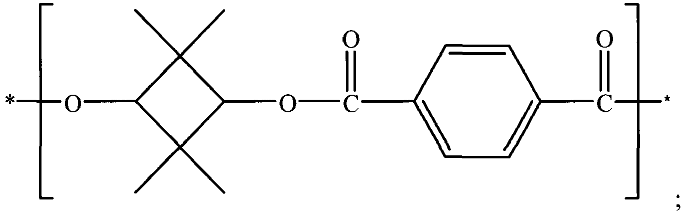 wherein the impact modifier comprises a copolymer of acrylonitrile, butadiene, and styrene; and wherein the composition comprises 55 to 70 weight percent of the aromatic polycarbonate, 5 to 15 weight percent of the copolyester, 20 to 30 weight percent of the impact modifier, and 0.2 to 2 weight percent of the black colorant.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples. EXAMPLES 1 AND 2, COMPARATIVE EXAMPLES 1 AND 2

Compositions were prepared using the components summarized in Table 1.

**Table 1**

| Component | Description |
|---|---|
| Polycarbonate 1 | Bisphenol A polycarbonate, CAS Reg. No. 11211-39-3, having a melt flow rate of about 30 grams per 10 minutes at 300 °C and 1.2 kilogram load; obtained from Sabic Innovative Plastics. |
| Polycarbonate 2 | Bisphenol A polycarbonate, CAS Reg. No. 11211-39-3, having a melt flow rate of about 6 grams per 10 minutes at 300 °C and 1.2 kilogram load; obtained from Sabic Innovative Plastics. |
| Polycarbonate 3 | Bisphenol A polycarbonate, CAS Reg. No. 11211-39-3, having a melt flow rate of about 60 to about 80 grams per 10 minutes at 300 °C and 1.2 kilogram load; obtained from Sabic Innovative Plastics. |
| Copolyester 1 | Copolymer of dimethyl terephthalate (DMT), 1,4-cyclohexanedimethanol (CHDM), and 2,2,4,4-tetramethyl-1,3-cyclobutanediol (TMCD), CAS Reg. No. 261716-94-3, with a melt volume flow rate of about 9 centimeter³/10 minutes at 265 °C and 2.16 kilogram load, and a heat deflection temperature of 84 °C at 3.2 millimeter thickness and 1.82 megapascals; obtained as TRITAN™ Copolyester TX1000 from Eastman Chemical Company. |
| Copolyester 2 | Copolymer of dimethyl terephthalate (DMT), 1,4-cyclohexanedimethanol (CHDM), and 2,2,4,4-tetramethyl-1,3-cyclobutanediol (TMCD), copolymer CAS Reg. No. 261716-94-3, with a melt volume flow rate of about 15 centimeter³/10 minutes at 265 °C and 2.16 kilogram load, and a heat deflection temperature of 92 °C at 3.2 millimeter thickness and 1.82 megapascals; obtained as TRITAN™ Copolyester TX2000 from Eastman Chemical Company. |
| PC-ITR | A block polyestercarbonate, CAS Reg. No. 235420-85-6, comprising about 19 mole percent resorcinol isophthalate/terephthalate ester linkages, about 6 mole % resorcinol carbonate linkages, and about 75 mole % bisphenol A carbonate linkages, having a glass transition temperature of about 136° C; obtained as LEXAN™ SLX 8020 Resin from Sabic Innovative Plastics. |
| ABS 1 | Acrylonitrile-butadiene-styrene copolymer, CAS Reg. No. 9003-56-9, prepared by bulk polymerization and having about 15-17 weight percent butadiene and about 12-19 weight percent acrylonitrile; obtained as AT07from NIPPON A&L. |
| SAN | Acrylonitrile-styrene copolymer, CAS Reg. No. 9003-56-9, prepared by bulk polymerization and having about 25 weight percent acrylonitrile; obtained as Bulk SAN C0581 from Sabic Innovative Plastics. |
| ABS 2 | Acrylonitrile-butadiene-styrene copolymer, CAS Reg. No. 9003-56-9, prepared by emulsion polymerization and having about 50 weight percent butadiene and about 42 weight percent acrylonitrile; obtained as HRG 181 from KUMHO Petrochemical. |
| ABS 3 | Acrylonitrile-butadiene-styrene copolymer, CAS Reg. No. 9003-56-9, having about 14-18 weight percent butadiene and about 13-18 weight percent acrylonitrile; obtained as Bulk ABS C29449 from Sabic Innovative Plastics. |
| Antioxidant 1 | Octadecyl 3-(3,5-di-*tert*-butyl-4-hydroxyphenyl)propionate, CAS Reg. No. 2082-79-3; obtained as IRGANOX™ 1076 from BASF. |
| Antioxidant 2 | Tris(2,4-di-tert-butylphenyl)phosphite, CAS Reg. No. 31570-04-4; obtained from Everspring Chemical Co. Ltd. |
| PETS | Pentaerythritol tetrastearate, CAS Reg. No. 115-83-3; obtained from FACI S.P.A. |
| ZnHPO₄ | Monozinc phosphate, CAS Reg. No. 13598-37-3; obtained from CFB Budenheim. |
| Carbon black | Carbon black pigment, CAS Reg. No. 1333-86-4; obtained as MONARCH™ 800 from Cabot. |
| Solvent Red 52 | Solvent Red 52, CAS Reg. No. 81-39-0; obtained as MACROLEX™ Red 5B from Lanxess. |
| Solvent Blue 104 | Solvent Red 104, CAS Reg. No. 116-75-6; obtained as SOLVAPERM™ Blue 2B from Clariant. |
| Acr/Si | Acrylate-silicone impact modifier, CAS Reg. No. 143106-82-5; obtained as METABLEN™ S-2001 from Mitsubishi Rayon Corp. |
| BPADP | Bisphenol A bis(diphenyl phosphate), CAS Reg. No. 5945-33-5; obtained from Daihachi Chemical. |

Compositions were prepared by dry-blending all components but BPADP, then compounding them in a twin-screw extruder at 250 °C. When utilized, BPADP was fed to the extruder in a middle zone. The extrudate was pelletized, and the pellets were dried in a vacuum oven for 2-4 hours at 80-90 ° C before use for injection molding.

Samples for property testing were injection molded using a barrel temperature of 260-270 ° C and a mold temperature of 70 ° C.

Melt flow rate values, expressed in units of grams per ten minutes, were determined according to ASTM D1238-13 at 260 °C and 2.16 kilogram load; stated values are an average of three measurements per composition. Flexural modulus and flexural strength values, expressed in units of megapascals, were determined according to ASTM D790-10 at 23 °C using test sample cross-sectional dimensions of 3.2 by 12.7 millimeters and a test speed of 1.27 millimeters/minute; stated values are an average of five measurements per composition. Tensile strength at yield values, expressed in units of megapascals, and tensile elongation at break values, expressed in units of percent, were determined according to ASTM D638-10 at 23 °C using a Type I bar having a thickness of 3.2 millimeters and a test speed of 5.5 millimeters per minute; stated values are the average of five measurements per composition. Notched Izod impact strength values, expressed in units of joules per meter, were determined according to ASTM D256-10 at 23 °C using test sample cross-sectional dimensions of 3.2 by 12.7 millimeters, and a pendulum energy of 5.5 joules; stated values are the average of five measurements per composition. In Tables 2 and 3, "Ductile failure (%)" refers to the percent of samples exhibiting ductile failure rather than brittle failure. Heat deflection temperature values, expressed in units of degrees centigrade, were determined according to ASTM D648-07 using bar cross-section dimensions of 3.2 millimeters × 12.5 millimeters, a loading fiber stress of 1.82 megapascals, a heating rate of 2.0 °C per minute, and a deflection at reading of 0.25 millimeter; stated values are the average of three measurements per composition.

CIE1976 LAB color data and reflection curves were acquired on an X-Rite ColorEye™ 7000A with D65 illumination, 10° observer, UV included, reflection mode, and a 2.5 millimeter sample thickness. SCI mode was used to include specular reflected light and give results that were dependent on surface gloss. Haze and gloss were determined according to ASTM D523-08 using a BYK-Gardner Micro-Haze instrument, a 2.5 millimeter sample thickness, and an angle of 60 degrees.

The examples in Table 2 illustrate the effect of adding a copolyester to an impact-modified polycarbonate composition. The results show that Examples 1 and 2, containing the copolyester, exhibit substantially lower haze and higher gloss while largely maintaining other properties relative to corresponding Comparative Examples 1 and 2 without copolyester.

**Table 2**

| | C. Ex. 1 | Ex. 1 | C. Ex. 2 | Ex. 2 |
|---|---|---|---|---|
| COMPOSITIONS | | | | |
| Polycarbonate 1 | 39.46 | 29.51 | 0.00 | 10.00 |
| Polycarbonate 2 | 39.46 | 29.51 | 73.74 | 53.74 |
| Copolyester 1 | 0.00 | 19.90 | 0.00 | 10.00 |
| ABS 1 | 19.90 | 19.90 | 0.00 | 0.00 |
| SAN | 0.00 | 0.00 | 14.00 | 14.00 |
| ABS 2 | 0.00 | 0.00 | 11.50 | 11.50 |
| Antioxidant 1 | 0.08 | 0.08 | 0.08 | 0.08 |
| Antioxidant 2 | 0.08 | 0.08 | 0.08 | 0.08 |
| PETS | 0.50 | 0.50 | 0.30 | 0.30 |
| ZnHPO₄ | 0.02 | 0.02 | 0.00 | 0.00 |
| Carbon black | 0.50 | 0.50 | 0.30 | 0.30 |

| PROPERTIES | | | | |
|---|---|---|---|---|
| Melt flow rate (g/10 min) | 19.3 | 19.0 | 3.88 | 5.17 |
| Flexural modulus (MPa) | 2190 | 2020 | 2130 | 2050 |
| Flexural strength (MPa) | 86.2 | 82.4 | 81.8 | 80.3 |
| Tensile strength (MPa) | 55.3 | 53.4 | 53.5 | 53.1 |
| Tens. elong. at break (%) | 68.98 | 67.44 | 87.52 | 85.16 |
| Notched Izod (J/m) | 841 | 834 | 809 | 774 |
| Ductile failure (%) | 100 | 100 | 100 | 100 |
| Heat deflect, temp. (°C) | 113 | 103 | 111 | 104 |
| L*, 2.5 mm | 27.9 | 27.5 | 28.4 | 28.3 |
| a*, 2.5 mm | -0.1 | -0.1 | 0.0 | 0.0 |
| b*, 2.5 mm | -1.4 | -1.4 | -1.2 | -1.2 |
| Haze, 2.5 mm | 344.2 | 205.2 | 43.66 | 32.46 |
| Gloss, 2.5 mm | 60.36 | 79.4 | 97.5 | 101.0 |

### EXAMPLES 3-6, COMPARATIVE EXAMPLES 3-5

These examples in Table 3 further illustrate the effect of adding a copolyester to an impact-modified polycarbonate composition. Two copolyesters differing in monomer composition were used.

Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thickness of 0.6 millimeters were conditioned at 23°C and 50% relative humidity for at least 48 hours. In the UL 94 20 mm Vertical Burning Flame Test, a set of five flame bars was tested. For each bar, a flame was applied to the bar then removed, and the time required for the bar to self-extinguish (first afterflame time, t1) was noted. The flame was then reapplied and removed, and the time required for the bar to self-extinguish (second afterflame time, t2) and the post-flame glowing time (afterglow time, t3) were noted. To achieve a rating of V-0, which was attained by all samples, the afterflame times t1 and t2 for each individual specimen must have been less than or equal to 10 seconds; and the total afterflame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. The "UL 94 Flame-out time (sec)" values in Tables 3 and 4 are average second afterflame times t2.

The results show that Examples 3 and 5, incorporating copolyester, exhibited lower haze and higher gloss than corresponding Comparative Examples 3 and 5. Although Example 4 and Comparative Example 4 are not rigorously comparable, the difference between them in polycarbonate composition should have little effect on haze and gloss. So the observed improvement in haze and gloss for Example 4 relative to Comparative Example 4 can be attributed to the presence of Copolyester 1 in Example 4. There is no comparative example to which Example 6 can be directly compared.

**Table 3**

| | C. Ex. 3 | Ex. 3 | C. Ex. 4 | Ex. 4 |
|---|---|---|---|---|
| COMPOSITIONS | | | | |
| Polycarbonate 3 | 0.00 | 0.00 | 0.00 | 0.00 |
| Polycarbonate 1 | 30.69 | 23.23 | 30.00 | 5.00 |
| Polycarbonate 2 | 30.70 | 23.23 | 41.79 | 61.79 |
| Copolyester 1 | 0.00 | 14.93 | 0.00 | 5.00 |
| Copolyester 2 | 0.00 | 0.00 | 0.00 | 0.00 |
| ABS 3 | 22.89 | 22.89 | 0.00 | 0.00 |
| SAN | 0.00 | 0.00 | 9.60 | 9.60 |
| ABS 2 | 0.00 | 0.00 | 5.70 | 5.70 |
| Acr/Si | 0.00 | 0.00 | 1.00 | 1.00 |
| BPADP | 13.93 | 13.93 | 10.80 | 10.80 |
| TSAN | 0.65 | 0.65 | 0.50 | 0.50 |
| Antioxidant 1 | 0.08 | 0.08 | 0.08 | 0.08 |
| Antioxidant 2 | 0.08 | 0.08 | 0.08 | 0.08 |
| PETS | 0.50 | 0.50 | 0.15 | 0.15 |
| Carbon black | 0.50 | 0.50 | 0.30 | 0.30 |
| Solvent Red 52 | 0.00 | 0.00 | 0.00 | 0.00 |
| Solvent Blue 104 | 0.00 | 0.00 | 0.00 | 0.00 |

| PROPERTIES | | | | |
|---|---|---|---|---|
| Melt flow rate (g/10 min) | 29.1 | 29.8 | 16.8 | 11.7 |
| Flexural modulus (MPa) | 2590 | 2450 | 2530 | 2420 |
| Flexural strength (MPa) | 90.9 | 91.9 | 95.6 | 94.4 |
| Tensile strength (MPa) | 58.2 | 59.5 | 62.6 | 61.7 |
| Tens. elong. at break (%) | 38.68 | 39.78 | 101.78 | 107 |
| Notched Izod (J/m) | 496 | 688 | 262 | 707 |
| Ductile failure (%) | 100 | 100 | 60 | 100 |
| Heat deflect. temp. (°C) | 74.7 | 74.4 | 85.4 | 84.6 |
| UL 94 Flame-out time (sec) | 1.32 | 0.98 | 3.43 | 4.15 |
| L*, 2.5 mm | 28.1 | 28.2 | 28.7 | 29.0 |
| a*, 2.5 mm | -0.1 | -0.1 | -0.2 | -0.2 |
| b*, 2.5 mm | -1.4 | -1.3 | -1.6 | -1.6 |
| Haze, 2.5 mm | 417.6 | 87.34 | 96.72 | 74.12 |
| Gloss, 2.5 mm | 48.76 | 96.70 | 96.14 | 98.46 |

| | | C. Ex. 5 | Ex. 5 | Ex. 6 |
|---|---|---|---|---|
| COMPOSITIONS | | | | |
| Polycarbonate 3 | | 9.90 | 9.90 | 0.00 |
| Polycarbonate 1 | | 60.76 | 31.07 | 0.00 |
| Polycarbonate 2 | | 5.94 | 5.94 | 69.39 |
| Copolyester 1 | | 0.00 | 0.00 | 9.50 |
| Copolyester 2 | | 0.00 | 29.69 | 0.00 |
| ABS 3 | | 0.00 | 0.00 | 9.50 |
| SAN | | 0.00 | 0.00 | 0.00 |
| ABS 2 | | 7.92 | 7.92 | 0.00 |
| Acr/Si | | 0.00 | 0.00 | 0.00 |
| BPADP | | 13.36 | 13.36 | 10.00 |
| TSAN | | 0.64 | 0.64 | 0.65 |
| Antioxidant 1 | | 0.08 | 0.08 | 0.08 |
| Antioxidant 2 | | 0.08 | 0.08 | 0.08 |
| PETS | | 0.30 | 0.30 | 0.50 |
| Carbon black | | 0.35 | 0.35 | 0.30 |
| Solvent Red 52 | | 0.18 | 0.18 | 0.00 |
| Solvent Blue 104 | | 0.49 | 0.49 | 0.00 |

| PROPERTIES | | | | |
|---|---|---|---|---|
| Melt flow rate (g/10 min) | | 31.3 | 30.1 | 11.6 |
| Flexural modulus (MPa) | | 2490 | 2250 | 2450 |
| Flexural strength (MPa) | | 91.1 | 82.7 | 97 |
| Tensile strength (MPa) | | 62.6 | 58.8 | 63.3 |
| Tens. elong. at break (%) | | 45.11 | 37.82 | 103.08 |
| Notched Izod (J/m) | | 607 | 657 | 128 |
| Ductile failure (%) | | 100 | 100 | 0 |
| Heat deflect. temp. (°C) | | 78.8 | 69.1 | 89 |
| UL 94 Flame-out time (sec) | | 1.22 | 2.48 | 2.75 |
| L*, 2.5 mm | | 27.9 | 27.4 | 28.1 |
| a*, 2.5 mm | | 0 | 0 | -0.1 |
| b*, 2.5 mm | | -1.8 | -1.9 | -1.5 |
| Haze, 2.5 mm | | 277.4 | 60.22 | 214.6 |
| Gloss, 2.5 mm | | 69.92 | 94.68 | 84.02 |

### EXAMPLE 8, COMPARATIVE EXAMPLE 6

These examples illustrate the effect of adding a block polyestercarbonate to an impact-modified polycarbonate composition. The results show that Example 8, containing block polyestercarbonate, exhibited much lower haze and higher gloss than Comparative Example 6 without block polyestercarbonate.

**Table 4**

| | C. Ex. 6 | Ex. 8 |
|---|---|---|
| COMPOSITIONS | | |
| Polycarbonate 1 | 60.76 | 45.92 |
| Polycarbonate 2 | 5.94 | 5.94 |
| Polycarbonate 3 | 9.90 | 9.90 |
| PC-ITR | 0.00 | 14.85 |
| BPADP | 13.36 | 13.36 |
| TSAN | 0.64 | 0.64 |
| ABS 2 | 7.92 | 7.92 |
| Antioxidant 1 | 0.08 | 0.08 |
| Antioxidant 2 | 0.08 | 0.08 |
| PETS | 0.30 | 0.30 |
| Carbon black | 0.35 | 0.35 |
| Solvent Red 52 | 0.18 | 0.18 |
| Solvent Blue 104 | 0.49 | 0.49 |

| PROPERTIES | | |
|---|---|---|
| Melt flow rate (g/10 min) | 31.3 | 24.8 |
| Melt viscosity (Pa-sec) | 162.1 | 186.9 |
| Flexural modulus (MPa) | 2490 | 2450 |
| Flexural strength (MPa) | 91.1 | 92.8 |
| Tensile strength (MPa) | 62.6 | 63.9 |
| Tens. elong. at break (%) | 45.11 | 53.19 |
| Notched Izod (J/m) | 607 | 648 |
| Heat deflect. temp. (°C) | 78.8 | 79.5 |
| UL 94 Flame-out time (sec) | 1.22 | 1.17 |
| L*, 2.5 mm | 27.9 | 28 |
| a*, 2.5 mm | 0 | 0.1 |
| b*, 2.5 mm | -1.8 | -1.9 |
| Haze, 2.5 mm | 277.4 | 98.46 |
| Gloss, 2.5 mm | 69.92 | 94.52 |

## Claims

1. A composition comprising, based on the total weight of the composition:
40 to 93.9 weight percent of an aromatic polycarbonate;
3 to 35 weight percent of a copolyester comprising cyclohexanedimethylene isophthalate/terephthalate repeat units having the structure 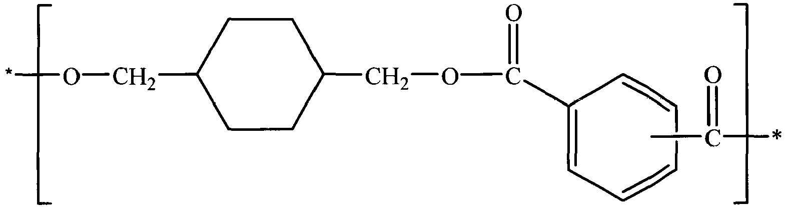 and 2,2,4,4-tetramethylcyclobutylene isophthalate/terephthalate repeat units having the structure 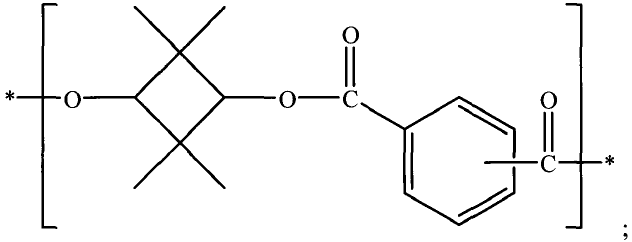
3 to 35 weight percent of an impact modifier; and
0.1 to 3 weight percent of a black colorant.

2. The composition of claim 1, wherein the aromatic polycarbonate comprises repeat units having the structure 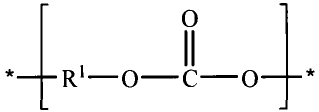 wherein at least 60 percent of the total number of R¹ groups are aromatic.

3. The composition of claim 1, wherein the aromatic polycarbonate comprises repeat units having the structure

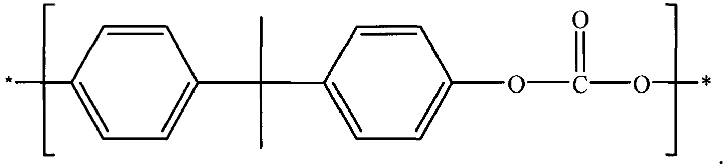

4. The composition of claim 1, wherein the copolyester comprises cyclohexanedimethylene terephthalate repeat units having the structure 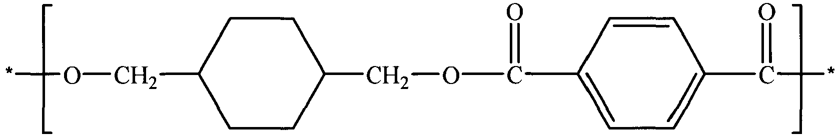 and 2,2,4,4-tetramethylcyclobutylene terephthalate repeat units having the structure

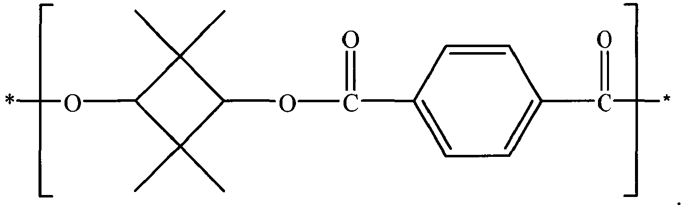

5. The composition of claim 4, wherein the copolyester comprises, based on the weight of the copolyester, 10 to 90 weight percent of the cyclohexanedimethylene isophthalate/terephthalate repeat units and 10 to 90 weight percent of the 2,2,4,4-tetramethylcyclobutylene isophthalate/terephthalate repeat units.

6. The composition of any of claims 1-5, comprising 55 to 70 weight percent of the aromatic polycarbonate, 5 to 15 weight percent of the copolyester, 20 to 30 weight percent of the impact modifier, and 0.2 to 2 weight percent of the black colorant.

7. The composition of any of claims 1-6, wherein the impact modifier comprises natural rubber, a fluoroelastomer, an ethylene-propylene rubber (EPR), an ethylene-butene rubber, an ethylene-propylene-diene monomer rubber (EPDM), an acrylate rubber, a hydrogenated nitrile rubber (HNBR), a silicone elastomer, a styrene-butadiene-styrene block copolymer (SBS), a styrene-butadiene rubber (SBR), a styrene-(ethylene-butene)-styrene block copolymer (SEBS), a styrene-isoprene-styrene block copolymer (SIS), a styrene-(ethylene-propylene)-styrene block copolymer (SEPS), an acrylonitrile-butadiene-styrene copolymer (ABS), an acrylonitrile-ethylene-propylene-diene-styrene copolymer (AES), a methyl methacrylate-butadiene-styrene block copolymers (MBS), or a combination thereof.

8. The composition of any of claims 1-7, wherein the impact modifier comprises a copolymer of acrylonitrile, butadiene, and styrene.

9. The composition of any of claims 1-8, further comprising 5 to 20 weight percent of a styrene-acrylonitrile copolymer.

10. The composition of any of claims 1-9, further comprising 5 to 20 weight percent of an organophosphate ester.

11. The composition of claim 1,
wherein the aromatic polycarbonate comprises repeat units having the structure 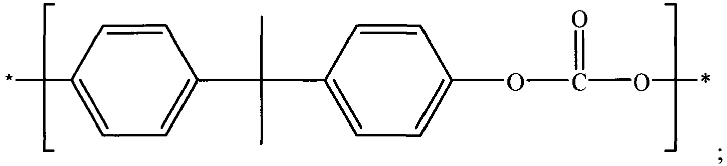 wherein the copolyester comprises cyclohexanedimethylene terephthalate repeat units having the structure 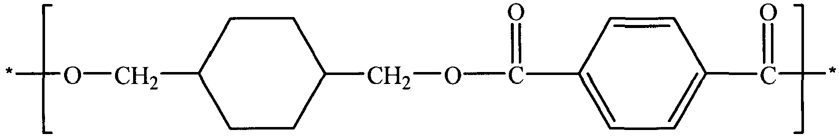 and 2,2,4,4-tetramethylcyclobutylene terephthalate repeat units having the structure 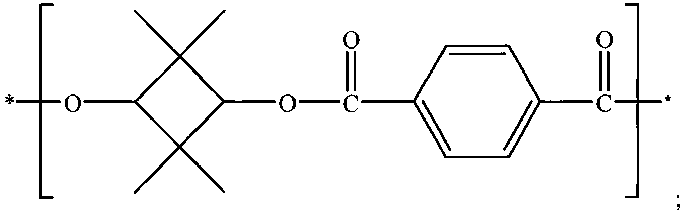 wherein the impact modifier comprises a copolymer of acrylonitrile, butadiene, and styrene; and
wherein the composition comprises 55 to 70 weight percent of the aromatic polycarbonate, 5 to 15 weight percent of the copolyester, 20 to 30 weight percent of the impact modifier, and 0.2 to 2 weight percent of the black colorant.

12. An article comprising the composition of any of claims 1-11.

13. The article of claim 12, selected from television bezels, covers of computer gaming consoles, and mobile phone front bezels and back covers.

14. The article of claim 12 or 13,
wherein the aromatic polycarbonate comprises repeat units having the structure 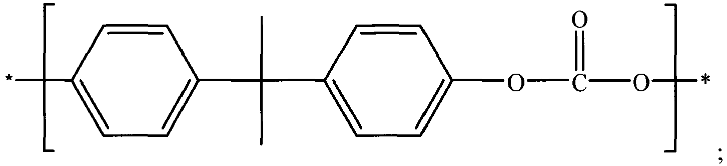 wherein the copolyester comprises cyclohexanedimethylene terephthalate repeat units having the structure 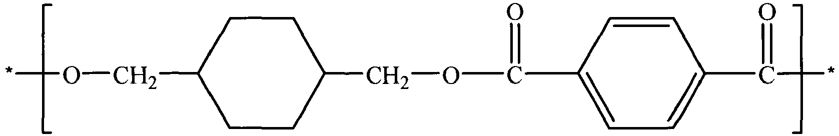 and 2,2,4,4-tetramethylcyclobutylene terephthalate repeat units having the structure 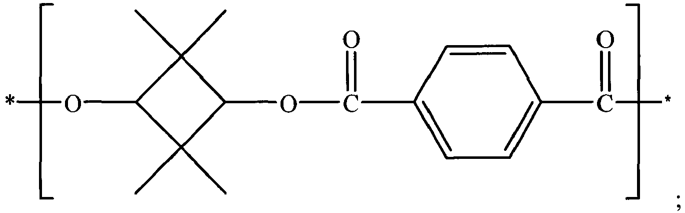 wherein the impact modifier comprises a copolymer of acrylonitrile, butadiene, and styrene; and
wherein the composition comprises 55 to 70 weight percent of the aromatic polycarbonate, 5 to 15 weight percent of the copolyester, 20 to 30 weight percent of the impact modifier, and 0.2 to 2 weight percent of the black colorant.

## Patentansprüche

1. Eine Zusammensetzung, die basierend auf dem Gesamtgewicht der Zusammensetzung Folgendes umfasst:
40 bis 93,9 Gewichts% eines aromatischen Polycarbonats;
3 bis 35 Gewichts% eines Copolyesters umfassend Cyclohexandimethylenisophthalat/Terephthalat - Wiederholungseinheiten mit der Struktur 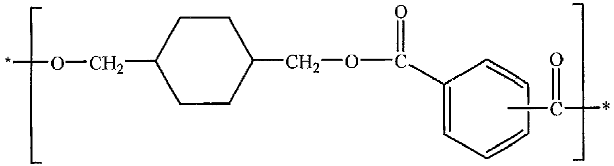 und 2,2,4,4-Tetramethylcyclobutylenisophthalat/Terephthalat - Wiederholungseinheiten mit der Struktur 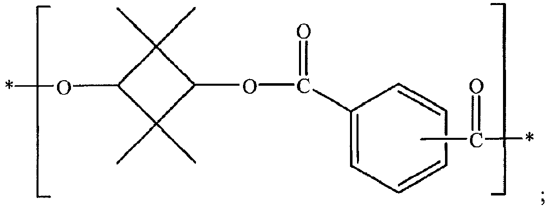
3 bis 35 Gewichts% eines Schlagzähmodifiers; und
0,1 bis 3 Gewichts% eines schwarzen Farbstoffs.

2. Die Zusammensetzung gemäß Anspruch 1, worin das aromatische Polycarbonat Wiederholungseinheiten umfasst mit der Struktur 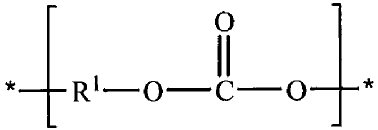 worin mindestens 60 Prozent der Gesamtanzahl von R¹ Gruppen aromatisch sind.

3. Die Zusammensetzung gemäß Anspruch 1, worin das aromatische Polycarbonat Wiederholungseinheiten umfasst mit der Struktur

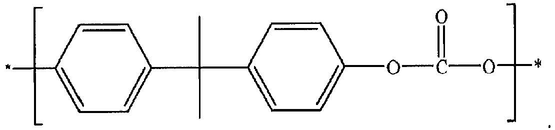

4. Die Zusammensetzung gemäß Anspruch 1, worin der Copolyester Cyclohexandimethylenterephthalat -Wiederholungseinheiten umfasst mit der Struktur 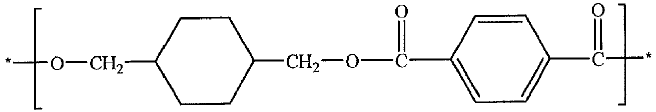 und
2,2,4,4-Tetramethylcyclobutylenterephthalat - Wiederholungseinheiten mit der Struktur

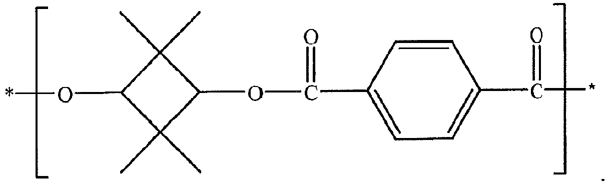

5. Die Zusammensetzung gemäß Anspruch 4, worin der Copolyester basierend auf dem Gewicht des Copolyesters 10 bis 90 Gewichts% der Cyclohexandimethylenisophthalat/Terephthalat - Wiederholungseinheiten und 10 bis 90 Gewichts% der 2,2,4,4-Tetramethylcyclobutylenisophthalat/Terephthalat - Wiederholungseinheiten umfasst.

6. Die Zusammensetzung gemäß irgendeinem der Ansprüche 1-5, umfassend 55 bis 70 Gewichts% des aromatischen Polycarbonats, 5 bis 15 Gewichts% des Copolyesters, 20 bis 30 Gewichts% des Schlagzähmodifiers, und 0,2 bis 2 Gewichts% des schwarzen Farbstoffs.

7. Die Zusammensetzung gemäß irgendeinem der Ansprüche 1-6, worin der Schlagzähmodifier natürlichen Gummi, ein Fluorelastomer, einen Ethylen-Propylen-Gummi (EPR), einen Ethylen-Buten-Gummi, einen Ethylen-Propylen-Dien Monomer-Gummi (EPDM), einen Acrylatgummi, einen hydrierten Nitrilgummi (HNBR), ein Silikonelastomer, ein Styren-Butadien-Styren-Block-Copolymer (SBS), einen Styren-Butadiengummi (SBR), ein Styren-(Ethylen-Buten)-Styren-Block-Copolymer (SEBS), ein Styren-Isopren-Styren-Block-Copolymer (SIS), ein Styren-(Ethylen-Propylen)-Styren-Block-Copolymer (SEPS), ein Acrylonitril-Butadien-Styren-Copolymer (ABS), ein Acrylonitril-Ethylen-Propylen-Dien-Styren-Copolymer (AES), ein Methylmethacrylat-Butadien-Styren-Block-Copolymer (MBS), oder eine Kombination daraus umfasst.

8. Die Zusammensetzung gemäß irgendeinem der Ansprüche 1-7, worin der Schlagzähmodifier ein Copolymer von Acrylonitril, Butadien und Styren umfasst.

9. Die Zusammensetzung gemäß irgendeinem der Ansprüche 1-8, weiter umfassend 5 bis 20 Gewichts% eines Styren-Acrylonitril-Copolymers.

10. Die Zusammensetzung gemäß irgendeinem der Ansprüche 1-9, weiter umfassend 5 bis 20 Gewichts% eines Organophosphatesters.

11. Die Zusammensetzung gemäß Anspruch 1, worin das aromatische Polycarbonat Wiederholungseinheiten mit der Struktur 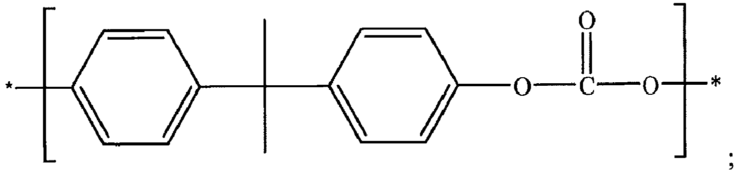 umfasst;
worin der Copolyester Cyclohexandimethylenterephthalat - Wiederholungseinheiten mit der Struktur 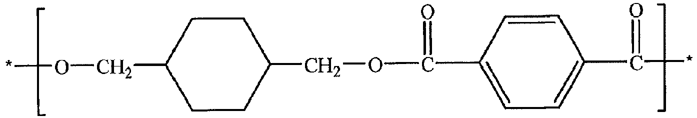 und
2,2,4,4-Tetramethylcyclobutylenterephthalat - Wiederholungseinheiten mit der Struktur 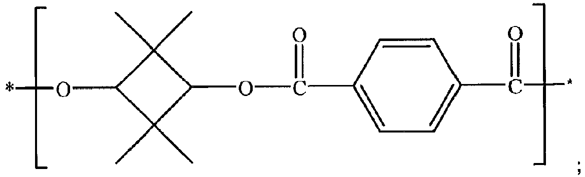 umfasst;
worin der Schlagzähmodifier ein Copolymer von Acrylonitril, Butadien, und Styren umfasst; und
worin die Zusammensetzung 55 bis 70 Gewichts% des aromatischen Polycarbonats, 5 bis 15 Gewichts% des Copolyesters, 20 bis 30 Gewichts% des Schlagzähmodifiers, und 0,2 bis 2 Gewichts% des schwarzen Farbstoffs umfasst.

12. Ein Artikel umfassend die Zusammensetzung gemäß irgendeinem der Ansprüche 1-11.

13. Der Artikel gemäß Anspruch 12, gewählt aus Fernsehereinfassungen, Abdeckungen von Computerspielkonsolen, und Mobiltelefon -Vordereinfassungen und -Rückenabdeckungen.

14. Der Artikel gemäß Anspruch 12 oder 13,
worin das aromatische Polycarbonat Wiederholungseinheiten mit der Struktur 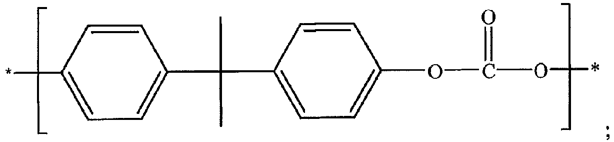 umfasst;
worin der Copolyester Cyclohexandimethylenterephthalat-Wiederholungseinheiten mit der Struktur 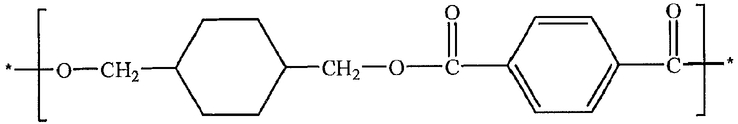 und
2,2,4,4-Tetramethylcyclobutylenterephthalat - Wiederholungseinheiten mit der Struktur 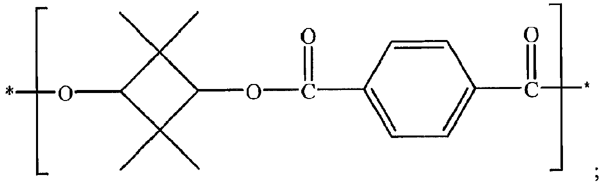 umfasst;
worin der Schlagzähmodifier ein Copolymer von Acrylonitril, Butadien, und Styren umfasst; und
worin die Zusammensetzung 55 bis 70 Gewichts% des aromatischen Polycarbonats, 5 bis 15 Gewichts% des Copolyesters, 20 bis 30 Gewichts% des Schlagzähmodifiers, und 0,2 bis 2 Gewichts% des schwarzen Farbstoffs umfasst.

## Revendications

1. Une composition comprenant, par rapport au poids total de la composition :
40 à 93,9 % en poids d'un polycarbonate aromatique ;
3 à 35 % en poids d'un copolyester comprenant des motifs répétitifs isophtalate/téréphtalate de cyclohexanediméthylène de structure 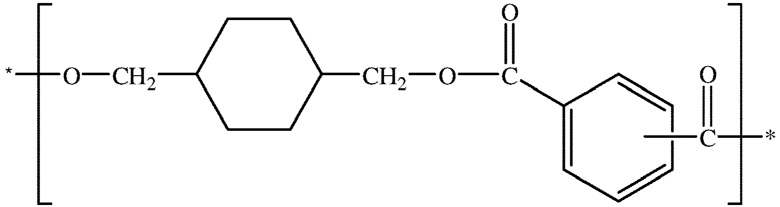 et des motifs répétitifs isophtalate/téréphtalate de 2, 2, 4, 4-tétraméthylcyclobutylène de structure 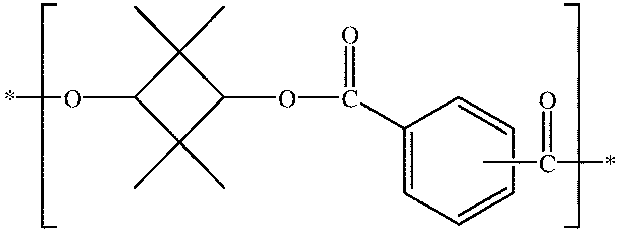 3 à 35 % en poids d'un modifiant choc ; et
0,1 à 3 % en poids d'un colorant noir.

2. La composition selon la revendication 1, dans laquelle le polycarbonate aromatique comprend des motifs répétitifs de structure 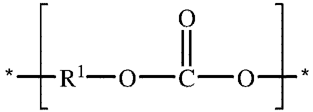 dans laquelle au moins 60 % du nombre total de groupes R¹ sont aromatiques.

3. La composition selon la revendication 1, dans laquelle le polycarbonate aromatique comprend des motifs répétitifs de structure

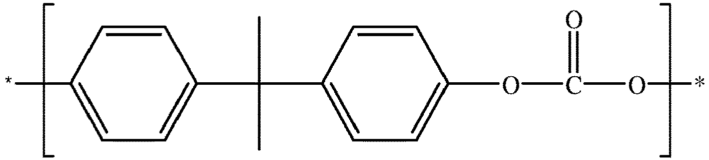

4. La composition selon la revendication 1, dans laquelle le copolyester comprend des motifs répétitifs téréphtalate de cyclohexanediméthylène de structure 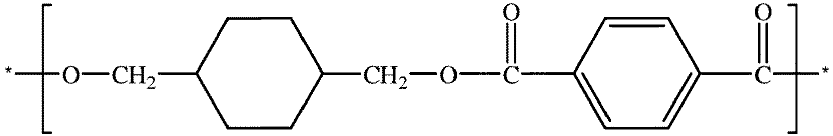 et des motifs répétitifs téréphtalate de 2, 2, 4, 4-tétraméthylcyclobutylène de structure

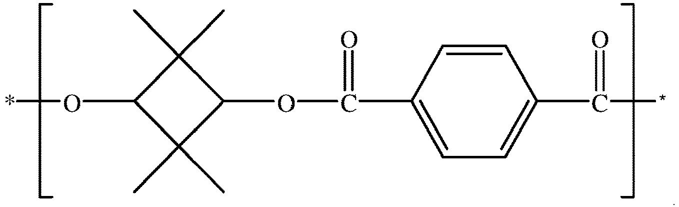

5. La composition selon la revendication 4, dans laquelle le copolyester comprend, par rapport au poids du copolyester, 10 à 90 % en poids des motifs répétitifs isophtalate/téréphtalate de cyclohexanediméthylène et 10 à 90 % en poids des motifs répétitifs isophtalate/ téréphtalate de 2, 2, 4, 4-tétraméthylcyclobutylène.

6. La composition selon l'une quelconque des revendications 1 à 5, comprenant 55 à 70 % en poids du polycarbonate aromatique, 5 à 15 % en poids du copolyester, 20 à 30 % en poids du modifiant choc, et de 0,2 à 2 % en poids du colorant noir.

7. La composition selon l'une quelconque des revendications 1 à 6, dans laquelle le modifiant choc comprend du caoutchouc naturel, un élastomère fluoré, un caoutchouc d'éthylène-propylène (EPR), un caoutchouc d'éthylène-butène, un caoutchouc d'éthylène-propylène-diène monomère (EPDM), un caoutchouc d'acrylate, un caoutchouc de nitrile hydrogéné (HNBR), un élastomère siliconé, un copolymère à blocs de styrène-butadiène-styrène (SBS), un caoutchouc de styrène-butadiène (SBR), un copolymère à blocs de styrène-(éthylène-butène)-styrène (SEBS), un copolymère à blocs de styrène-isoprène-styrène (SIS), un copolymère à blocs de styrène-(éthylène-propylène)-styrène (SEPS), un copolymère d'acrylonitrile-butadiène-styrène (ABS), un copolymère d'acrylonitrile-éthylène-propylène-diène-styrène (AES), un copolymère à blocs de méthacrylate de méthyle-butadiène-styrène (MBS), ou une combinaison de ceux-ci.

8. La composition selon l'une quelconque des revendications 1 à 7, dans laquelle le modifiant choc comprend un copolymère d'acrylonitrile, de butadiène et de styrène.

9. La composition selon l'une quelconque des revendications 1 à 8, comprenant en outre 5 à 20 % en poids d'un copolymère de styrène-acrylonitrile.

10. La composition selon l'une quelconque des revendications 1 à 9, comprenant en outre 5 à 20 % en poids d'un ester phosphate organique.

11. La composition selon la revendication 1,
dans laquelle le polycarbonate aromatique comprend des motifs répétitifs de structure 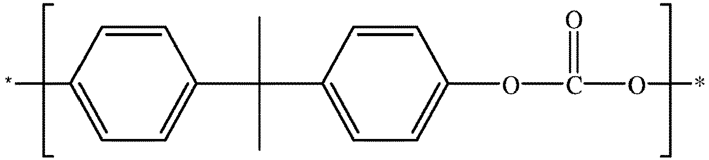 dans laquelle le copolyester comprend des motifs répétitifs téréphtalate de cyclohexanediméthylène de structure 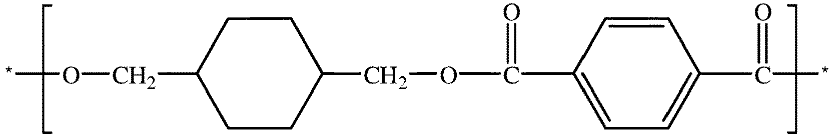 et des motifs répétitifs téréphtalate de 2, 2, 4, 4-tétraméthylcyclobutylène de structure 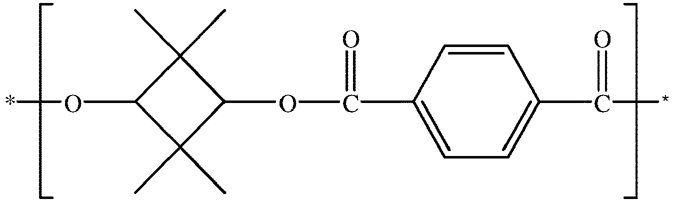 dans laquelle le modifiant choc comprend un copolymère d'acrylonitrile, de butadiène et de styrène ; et
laquelle composition comprend 55 à 70 % en poids du polycarbonate aromatique, 5 à 15 % en poids du copolyester, 20 à 30 % en poids du modifiant choc, et 0,2 à 2 % en poids du colorant noir.

12. Un article comprenant la composition de l'une quelconque des revendications 1 à 11.

13. L'article selon la revendication 12, choisi parmi les cadres de télévision, les capots de consoles de jeu informatique, et les cadres frontaux et les capots arrière de téléphone mobile.

14. L'article selon la revendication 12 ou 13,
dans lequel le polycarbonate aromatique comprend des motifs répétitifs de structure 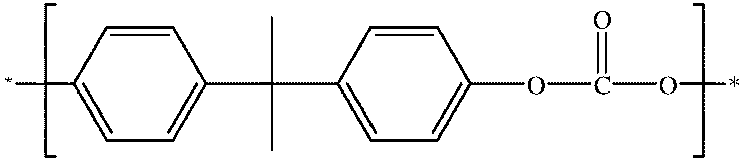 dans lequel le copolyester comprend des motifs répétitifs téréphtalate de cyclohexanediméthylène de structure 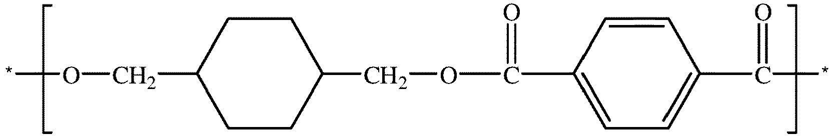 et des motifs répétitifs téréphtalate de 2, 2, 4, 4-tétraméthylcyclobutylène de structure 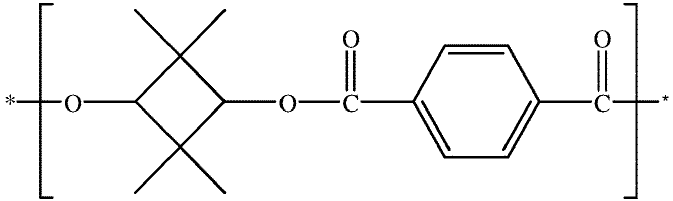 dans lequel le modifiant choc comprend un copolymère d'acrylonitrile, de butadiène et de styrène ; et
dans lequel la composition comprend 55 à 70 % en poids du polycarbonate aromatique, 5 à 15 % en poids du copolyester, 20 à 30 % en poids du modifiant choc, et 0,2 à 2 % en poids du colorant noir.
